# FASCICULE DE BREVET EUROPEEN

(11) **EP 0 787 744 B1**
(45) Date de publication et mention de la délivrance du brevet: **13.06.2001**
(21) Numéro de dépôt: 97400197.6
(22) Date de dépôt: 28.01.1997
(51) Int. Cl.: C08B 37/16

(54) **Dérivés substitués des per(3,6-anhydro)cyclodextrines, leur procédé de préparation et leur utilisation pour la séparation d'ions**
Substituierte Derivate von per(3,6-anhydro)Cyclodextrinen, Verfahren zu deren Herstellung und deren Verwendung zur Ionentrennung
Substituted derivatives of per(3,6-anhydro)cyclodextrins, process for their preparation and their uses for separation of ions

(30) Priorité: 30.01.1996 FR 9601073
(43) Date de publication de la demande: 06.08.1997
(73) Titulaire: COMMISSARIAT A L'ENERGIE ATOMIQUE, 75015 Paris Cédex 15 (FR)
(72) Inventeur: Baudin, Cécile, 75014 Paris (FR); Perly, Bruno, 78320 La Verriere (FR); Gadelle, Andrée, 38330 Montbonnot (FR)
(74) Mandataire: Dubois-Chabert, Guy

(56) Documents cités:
- THE JOURNAL OF ORGANIC CHEMISTRY, vol. 60, no. 12, 16 Juin 1995, USA, pages 3898-3903, XP002013616 P. R. ASHTON ET AL.: "A novel approach to the synthesis of some chemically-modified cyclodextrins"

## Description

La présente invention a pour objet des dérivés substitués de cyclodextrines, utilisables en particulier par la complexation sélective d'ions.

De façon plus précise, elle concerne la modification chimique de per(3,6-anhydro)cyclodextrines pour modifier leurs propriétés, en particulier leur sélectivité dans la complexation d'ions.

Les cyclodextrines ou cyclomaltooligosaccharides sont des composés d'origine naturelle formés par l'enchaînement d'unités glucose liés en α-(1,4).

De nombreux travaux ont montré que ces composés pouvaient former des complexes d'inclusion avec des molécules hydrophobes permettant ainsi leur solubilisation dans des milieux aqueux. De nombreuses applications ont été proposées pour tirer profit de ce phénomène, en particulier dans le domaine pharmaceutique, comme il est décrit par D. Duchêne "Pharmaceutical application of cyclodextrins" dans "Cyclodextrins and their industrial uses". D. Duchêne Ed., Editions de Santé, Paris, 1987, pp 213-257.

Des spécialités pharmaceutiques ont déjà été commercialisées au Japon, en Italie et plus récemment en France, sous forme de complexes dans les cyclodextrines. En France, le premier principe actif mis sur le marché sous la forme d'un complexe d'inclusion dans une cyclodextrine est le piroxicam, anti-inflammatoire commercialisé par Pierre Fabre Médicament, sous le nom de BREXIN®. Parmi les très nombreux dérivés modifiés de ces cyclodextrines, ceux pour lesquels la cavité est retournée sur elle-même présentent des propriétés intéressantes même si leur capacité à inclure des molécules organiques est perdue ou très limitée. Des composés de ce type sont les per(3,6-anhydro)cyclodextrines.

La synthèse de ces peranhydrocyclodextrines a été décrite dès 1991 (Gadelle A. et Defaye J., Angew. Chem. Int. Ed. Engl., (1991), 30, 78-79 ; Ashton P.R., Ellwood P., Staton I. and Stoddart J.F., Angew . Chem. Int. ed. Engl., (1991)30, 80-81), et il a été montré que ces dérivés présentent des solubilités intéressantes aussi bien dans l'eau que dans les solvants organiques. Quelques études ultérieures, (Yamamura H. and Fujita K. Chem. Pharm. Bull., (1991) 39, 2505-2508 ; ; Yamamura H., Ezuka T., Kawase Y., Kawai M., Butsugan Y. and Fujita K., J. Chem. Soc., Chem. Com., (1993) 636-637 ; Yamamura H. Nagaoka H., Kawai M. and Butsugan Y., Tetrahedron Lett. (1995) 36, 1093-1094) ont de plus montré que ces dérivés peranhydro pouvaient complexer des ions avec une sélectivité non négligeable.

Ashton et al dans J. Org. Chem., 60, 1995, p. 3898-3903 ont décrit la synthèse d'un dérivé de peranhydrocyclodextrine substitué en position 2 par un groupe méthyle.

Toutefois, cette modification chimique n'a pas été effectuée en vue d'optimiser les propriétés de complexation ou de sélectivité des peranhydrocylodextrines.

La présente invention a précisément pour objet de nouveaux dérivés de peranhydrocyclodextrines dans lesquels une modification chimique a été effectuée pour modifier leurs propriétés, en particulier leur sélectivité vis-à-vis des ions qu'elles sont susceptibles de complexer.

Selon l'invention, cette modification porte sur les groupes hydroxyle présents sur cette molécule ainsi que sur la configuration du carbone C₂ qui peut être inversée pour conduire à des dérivés de type L-mannose.

Selon l'invention, le dérivé substitué de per(3,6 anhydro)cyclodextrine répond à l'une des formules suivantes : 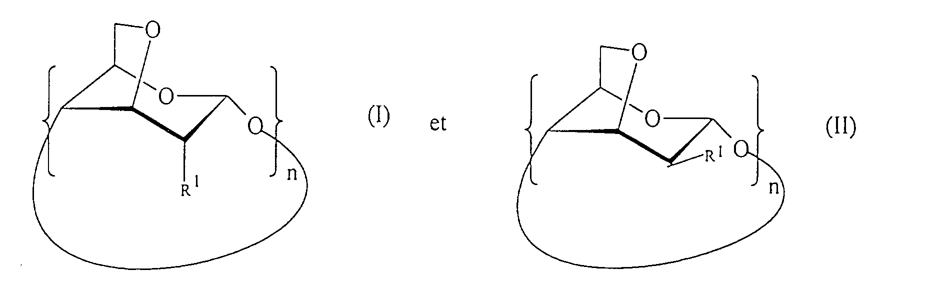 dans lesquelles les R¹ qui peuvent être identiques ou différents, représentent un atome d'hydrogène, un atome d'halogène, un groupe répondant à l'une des formules : OH, OR², OM, SH, SR², OCOR², NH₂, NR²R³, CONR²R³, CO NH₂ CN, COOR², COOH, OSO₂R², N₃ et R², dans lesquelles R² représente un groupe hydrocarboné, aliphatique ou aromatique, saturé ou insaturé, pouvant comporter un ou plusieurs hétéroatomes choisis parmi O, S et N, R³ représente un atome d'hydrogène ou un groupe hydrocarboné, aliphatique ou aromatique, saturé ou insaturé, pouvant comporter un ou plusieurs hétéroatomes choisis parmi O, S et N, et M représente un métal ou un cation monovalent, et n est égal à 6,7 ou 8, / à condition que l'un au moins des R¹ ne soit pas le groupe OH et que R¹ ne soit pas le groupe méthoxy.

Dans ce dérivé, les groupes hydrocarbonés aliphatiques ou aromatiques, susceptibles d'être utilisés pour R² et R³ peuvent être de divers types. Ils sont constitués par une chaîne carbonée dans laquelle certains atomes de carbone peuvent être remplacés par un ou plusieurs hétéroatomes tels que 0, S et N, et ils peuvent comporter une ou plusieurs insaturations éthyléniques ou acétyléniques. Par ailleurs, le groupe hydrocarboné peut comporter différents substituants, en particulier des groupes fonctionnels ou des atomes d'halogènes. Les groupes hydrocarbonés aromatiques peuvent être constitués par le groupe phényle et le groupe tosyle, éventuellement substitués, par exemple par des groupes alkyle de 1 à 20 atomes de carbone.

Selon un premier mode de réalisation de l'invention tous les R¹ représentent OCOR² avec R² représentant un groupe alkyle, linéaire ou ramifié, de 1 à 20 atomes de carbone, ou OR² avec R² représentant un groupe alkyle linéaire ou ramifié de 2 à 20 atomes de carbone.

Selon un second mode de réalisation de l'invention, le dérivé substitué comporte au moins un groupe R¹ constitué par un groupe partant tel qu'un atome d'halogène comme I, Cl, Br ou F, un groupe OSO₂R², N₃ ou OM avec M ayant la signification donnée ci-dessus.

Les dérivés correspondant à ce second mode de réalisation de l'invention sont des produits intermédiaires, utilisables en particulier pour apporter d'autres substituants, qui ne sont pas liés par un atome d'oxygène au cycle glucose ou maltose de la cyclodextrine.

Avantageusement, le groupe partant R¹ répond à la formule OSO₂R² avec R² représentant CF₃ ou

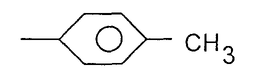

Les dérivés de cyclodextrine de l'invention peuvent être préparés par différents procédés.

Lorsque le dérivé de cyclodextrine répond à la formule (I) ou (II) donnée ci-dessus dans laquelle au moins l'un des R¹ représente un groupe de formule OR² ou OCOR2 avec R² ayant la signification donnée ci-dessus, les autres R¹ représentant OH et n étant égal à 6, 7 ou 8, ceux-ci peuvent être préparés par un procédé consistant à faire réagir une peranhydrocyclodextrine de formule : 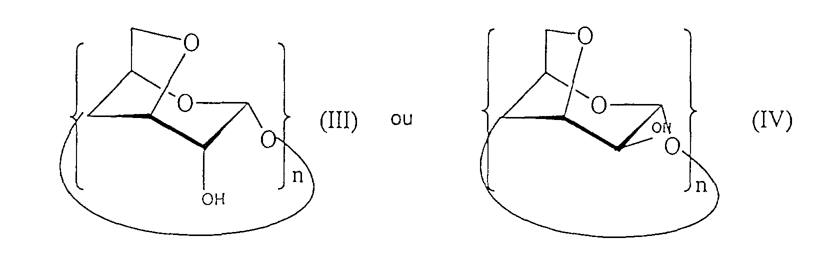 dans lesquelles n est égal à 6, 7 ou 8,
avec un composé de formule R²X, R²COX ou (R²CO)₂O dans lequel R² a la signification donnée ci-dessus et X représente un atome d'halogène.

Pour effectuer cette réaction, on utilise la quantité de réactif R²X, R²COX ou (R²CO)₂O correspondant à la quantité stoechiométrique nécessaire pour modifier un ou plusieurs des groupe OH de la cyclodextrine.

Lorsque l'on veut préparer un dérivé de cyclodextrine dans lequel l'un au moins des R1 représente un atome d'halogène ou un groupe de formule SH, SR², NH₂, NR²R³, CONR²R³, CONH₂, CN, COOR², COOH, OSO₂R², N₃ ou R², avec R², R³ et M ayant les significations données ci-dessus, et n est égal 6, 7 ou 8, on peut effectuer les étapes suivantes :
1) faire réagir une peranhydrocyclodextrine de formule : 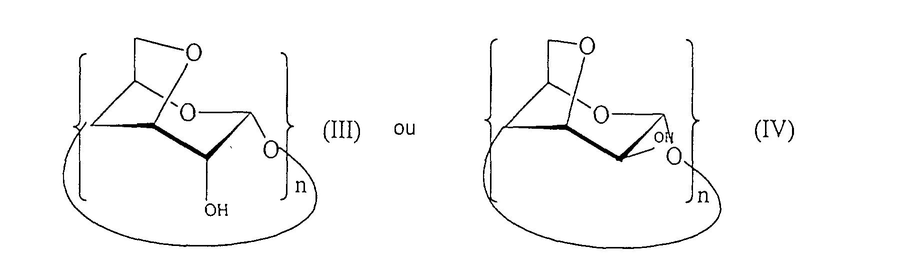 dans lesquelles n est égal à 6, 7 ou 8, avec un hydrure de métal alcalin pour convertir le(s) groupe(s) OH en groupe(s) OM avec M représentant un métal alcalin ;
2) faire réagir la peranhydrocyclodextrine modifiée obtenue en 1) avec un chlorure de formule ClSO₂R² avec R² ayant la signification donnée ci-dessus, pour obtenir le dérivé de formule (I) ou (II) dans laquelle l'un au moins des R¹ est un groupe de formule OSO₂R² ; et
3) lorsque R¹ doit être différent de OSO₂R², faire réagir le dérivé obtenu dans la deuxième étape avec un ou plusieurs réactifs appropriés pour remplacer OSO₂R² par le groupe R¹ voulu.

Dans ce procédé on transforme tout d'abord la per(3,6-anhydro)cyclodextrine en alcoolate par action d'hydrure de métal alcalin, puis on convertit cet alcoolate en dérivé comportant un groupe partant de formule OSO₂R², que l'on fait réagir ensuite en une ou plusieurs étapes avec un ou plusieurs réactifs appropriés pour remplacer ce groupe partant par le groupe R¹ voulu.

Ainsi, dans le cas où R¹ doit représenter N₃, on peut faire réagir N₃M et le composé défini en 2). Le composé ainsi obtenu appelé azide peut subir une hydrogénation catalytique ou être traité en présence d'ammoniac NH₃, on obtient ainsi le produit où R¹ doit représenter NH₂.

Le produit où R¹ doit représenter NR²R³ est obtenu en faisant réagir le composé défini en 2) sur le composé NHR2R3.

Dans le cas où R¹ doit représenter un atome d'halogène X, on peut faire réagir le composé défini en 2) avec X⁻.

Le composé ainsi obtenu (R¹ = X) peut réagir avec HS⁻ ou R²S⁻ pour donner un composé où R¹ représentera SH ou SR².

Le composé où R¹ représente un halogène peut réagir avec R¹₂LiCu (R¹ représente un groupe hydrocarboné) pour donner un composé final où R¹ représente alors un groupe hydrocarboné.

De même, le composé où R¹ représente un halogène peut réagir avec CN⁻ pour donner un composé final où R¹ représentera CN.

De même, le composé où R¹ représente CN peut par hydrolyse ménagée donner un composé où R¹ représentera CONH₂. Le composé où R¹ représente CN peut par hydrolyse complète donner un composé où R¹ représentera COOH.

Le composé où R¹ représente COOH peut par estérification donner un composé où R¹ représentera COOR².

Le composé où R¹ représente COOH peut réagir sur NHR²R³ en présence de DCC (dicyclohexylcarbodiimine) pour donner un composé où R¹ représentera NR²R³.

Pour préparer les dérivés de formule (I) ou (II) dans laquelle l'un au moins des R¹ représente un atome d'hydrogène, on peut soumettre une peranhydrocyclodextrine de formule (III) ou (IV) à une réduction, par exemple au moyen de AlLiH₄ pour remplacer les groupes OH par H.

Pour préparer les dérivés de formule (I) ou (II) dans laquelle l'un au moins des R¹ représente OM, on peut faire réagir une peranhydrocyclodextrine de formule (III) ou (IV) avec un hydrure métallique HM.

Les dérivés de cyclodextrine de l'invention présentent de nombreux avantages. En particulier lorsqu'ils sont persubstitués, c'est-à-dire lorsque tous les R¹ sont différents du groupe OH, on a des dérivés qui présentent une bonne solubilité dans les solvants organiques tels que le chloroforme, l'acétone, le tétrahydrofurane etc. Cette solubilité est intéressante pour des applications en séparation ionique car elle permet de réaliser la séparation par des procédés d'échanges liquide-liquide qui sont bien connus dans la technique.

Par ailleurs, la possibilité d'introduire un ou plusieurs groupes chimiques particuliers permet de construire sur mesure des agents complexants pour des ions très divers. Cette facilité est de plus amplifiée par le fait que les trois cyclodextrines naturelles qui peuvent être utilisées comme matière de base, ont des diamètre de cavité différents qui peuvent apporter une sélection supplémentaire en rapport avec la taille des ions à séparer.

Les produits de départ de formules (III) ou (IV) utilisés dans l'invention peuvent être préparés par des procédés classiques tels que ceux décrits dans les articles précités de Gadelle A. et al. et de Ashthon P. R. et al.

L'invention a encore pour objet un procédé de séparation d'ions présents dans une solution aqueuse, qui consiste à mettre en contact la solution avec un dérivé de cyclodextrine conforme à l'invention pour complexer cet ion et le séparer de la solution sous forme de complexe de cyclodextrine.

Pour réaliser la mise en contact, on peut dissoudre le dérivé de cyclodextrine dans un solvant organique immiscible avec la solution aqueuse, par exemple dans du chloroforme.

Les ions susceptibles d'être séparés de cette façon sont en particulier les ions de métaux alcalins, les actinides, les lanthanides et certains métaux polluants tels que le plomb, le mercure, le cobalt ou le strontium.

D'autres caractéristiques et avantages de l'invention apparaîtront mieux à la lecture des exemples qui suivent, donnés à titre illustratif et non limitatif, en référence au dessin annexé sur lequel :
- les figures 1a, 1b, 1c et 1d sont des spectres de résonance magnétique nucléaire (RMN) du proton du dérivé de l'exemple 1 seul (a) ou en présence de 10 mmol/L de NaCl(b) NH₄Cl(c) ou KCl (d) ;
- la figure 2 est un spectre RMN du proton du dérivé de cyclodextrine préparé dans l'exemple 2 ; et
- la figure 3 est une représentation schématique des taux de complexation (en %) de différents ions par la peranhydrocyclodextrine de départ et par le dérivé de l'exemple 1.

### EXEMPLE 1

### Synthèse de l'hexakis(3,6 anhydro-2-O-acétyl)-cyclomaltohexaose

Ce dérivé répond à la formule (I) donnée ci-dessus dans laquelle tous les R1 représentent OCOCH3 et n est égal à 6.

On dissout 200 mg (0,23 mmol) d'hexakis(3,6-anhydro)cyclomaltohexaose dans 2 mL de pyridine et 2 mL d'anhydride acétique, et on chauffe à 70°C pendant 10 heures. La réaction est contrôlée par des prélèvements analysés par RMN (200 MHz). A la fin de la réaction, le solvant est évaporé et le résidu est dissous dans l'eau et filtré. Le produit est chromatographié sur colonne µ-Bondapack C₁₈ en utilisant un mélange méthanol-eau (50-50), et il est caractérisé par spectrométrie de masse et par RMN. Ses solubilités sont de 39 mmol/L dans l'eau et 51 mmol/L dans CHCl₃, à 25°C.

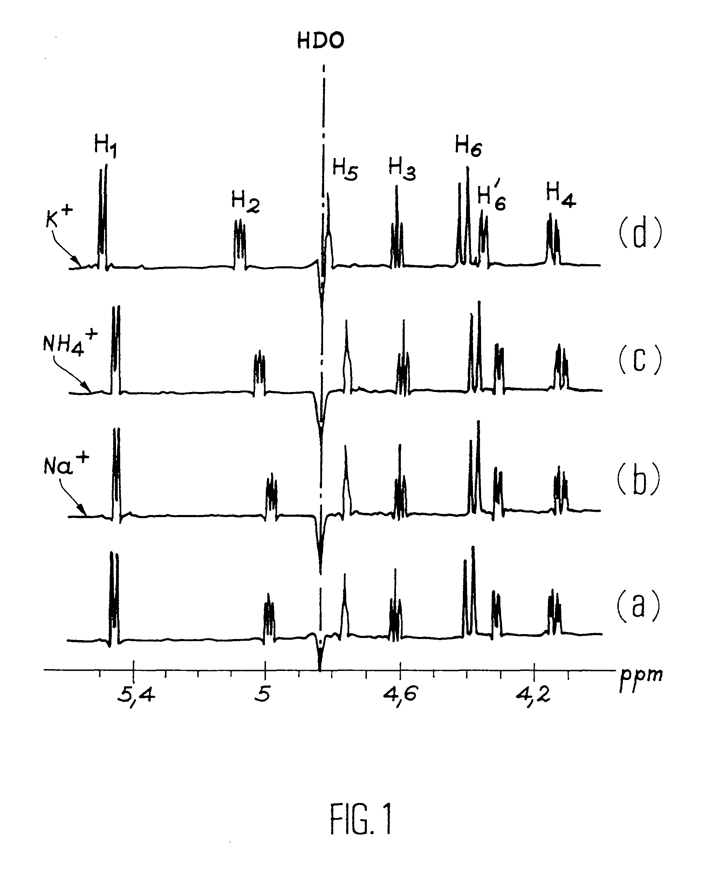

- La figure 1(a) illustre le spectre partiel RMN ¹H(500 MHz, 298K) dans D₂O du composé à une concentration de 3 mmol/L ;
- la figure 1(b) illustre le spectre partiel RMN ¹H, du composé dans les mêmes conditions, en présence de 10 mmol/L de chlorure de sodium ;
- la figure 1(c) illustre le spectre partiel RMN ¹H dans D₂O du composé, dans les mêmes conditions, en présence de 10 mmol/L de NH₄Cl ; et
- la figure 1(d) illustre le spectre partiel RMN¹H du composé dans les mêmes conditions, en présence de 10 mmol/L de chlorure de potassium.

Une comparaison des spectres des figures 1a, 1b, 1c et 1d montre une importante sélectivité de complexation du potassium, en particulier par rapport au sodium. Cette sélectivité se déduit des variations de déplacements chimiques observées en présence des différents sels.

### EXEMPLE 2

### Synthèse du mono-2-tosyl-3,6-anhydrocyclomaltohexaose

Ce composé répond à la formule (I) dans laquelle un seul R¹ représente 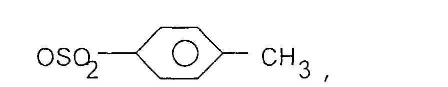 les autres R¹ représentent OH et n = 6.

On disperse 300 mg (0,342 mmol) d'hexakis (3,6-anhydro)cyclomaltohexaose lyophilisés dans 80 mL de diméthylformamide (DMF) sec à 70°C pendant 15 minutes. La solution est refroidie jusqu'à température ambiante, prélevée à la seringue puis ajoutée à 43 mg d'hydrure de sodium (NaH) dispersés dans l'huile. La solution devient limpide après 20 minutes d'agitation. Le chlorure de tosyle (65,2 mg soit 0,342 mmol) dilué dans 3 mL de DMF sec est alors additionné à l'aide d'une seringue à la solution précédente. Le solvant est évaporé et le produit brut est chromatographié en HPLC sur colonne µ-Bondapack C₁₈ en utilisant un gradient d'élution de 0 à 100 % % de méthanol dans l'eau (Waters, colonne semi-préparative). La solution méthanolique est prélevée au temps de rétention 34 minutes. Le produit est caractérisé par spectrométrie de masse et par RMN.

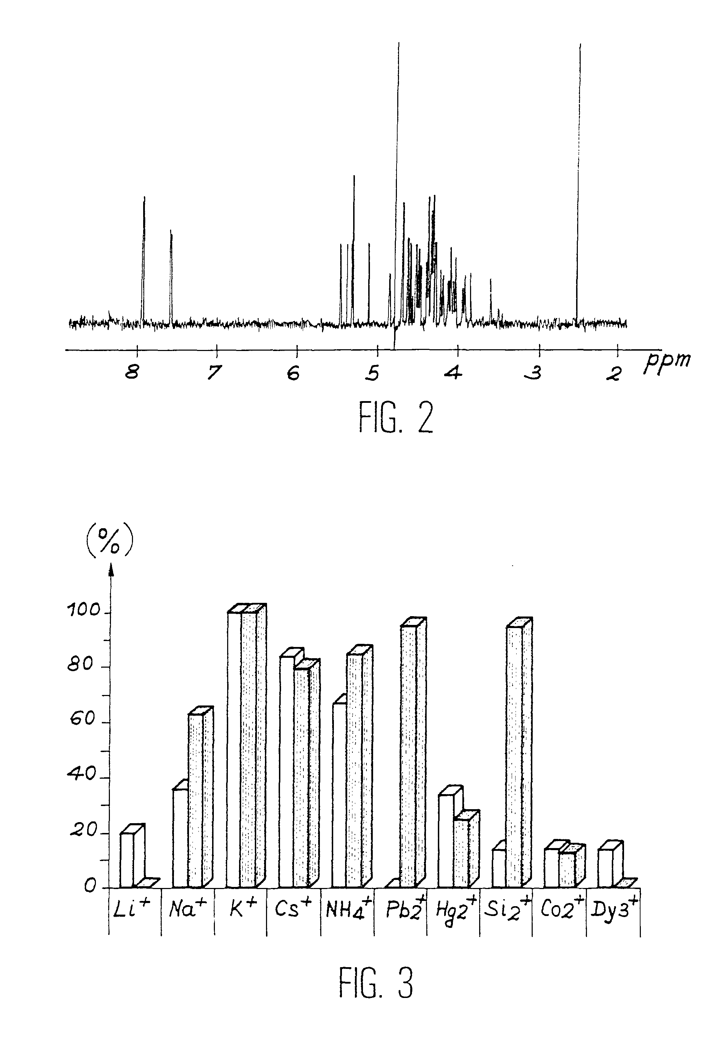

La figure 2 illustre le spectre RMN¹H (500 MHz, 303K) dans D₂O du mono-2-tosyl-hexakis(3,6-anhydro)cyclomaltohexaose. Ce spectre a été totalement attribué par RMN 1D et 2D et indique une pureté supérieure à 99 %. L'intégration digitale des signaux des protons aromatiques du groupe tosyle et des protons anomériques confirme la monosubstitution.

### EXEMPLE 3

### Mise en évidence de la complexation d'ions par le composé de l'exemple 1, par chromatographie sur plaques échangeuses d'ions

L'utilisation de plaques de chromatographie sur couches minces chargées en ions permet une évaluation rapide de la complexation de ces ions par les espèces à évaluer. Dans le cas présent, des plaques de type Polygram Ionex 25-SA-Na (Macherey-Nagel, réf. : 80613) chargées en divers contre-ions ont été utilisées.

Ainsi, on utilise des plaques de chromatographie sur lesquelles sont fixés, respectivement, des ions Li⁺, Na⁺, K⁺, Cs⁺, NH₄⁺, Pb²⁺, Hg²⁺, Sr²⁺, Co²⁺, Dy³⁺.

Dans chaque essai, on introduit sur la plaque le composé de l'exemple 1 qui, s'il complexe les ions, sera retenu sur la plaque. On développe ensuite les plaques quatre fois dans l'eau, en raison de la faible migration des dérivés de cyclodextrine, puis on détermine le degré de complexation (en %) par la formule suivante (1 - Rf) x 100, où Rf représente le rapport : distance parcourue par le dérivé de cyclodextrine/distance parcourue par le solvant. Les résultats obtenus sont présentés sur la figure 3 (colonnes en blanc).

Sur cette figure, on a donné, à titre comparatif, les résultats (colonnes en gris) obtenus dans les mêmes conditions avec le dérivé non substitué : hexakis(3,6-anhydro)cyclomaltohexaose.

On constate ainsi que dans la série des ions alcalins, les deux composés montrent une forte sélectivité pour le potassium et le césium. L'ion ammonium est également complexé par ces deux composés. Ces résultats sont en parfait accord avec les données précédentes obtenues par RMN. La complexation des ions Co²⁺ et Dy³⁺ est, par contre, fort modeste. Un aspect particulièrement important concerne la comparaison de la complexation du plomb et du mercure. Une remarquable modification de sélectivité est observée vis-à-vis de ces deux métaux en comparant les deux dérivés testés. Cette observation est de toute première importance pour des applications potentielles en décontamination humaine.

Les dérivés substitués de l'invention sont donc très intéressants pour diverses applications. En effet, en choisissant les substituants de façon appropriée, on peut leur conférer une sélectivité de complexation vis-à-vis de certains ions par rapport à d'autres ions, ce qui conduit à des applications intéressantes, par exemple dans le domaine médical pour la décontamination humaine, ou encore, pour la séparation des actinides et des lanthanides.

## Revendications

1. Dérivé substitué de per(3,6 anhydro)cyclodextrine répondant à l'une des formules suivantes : 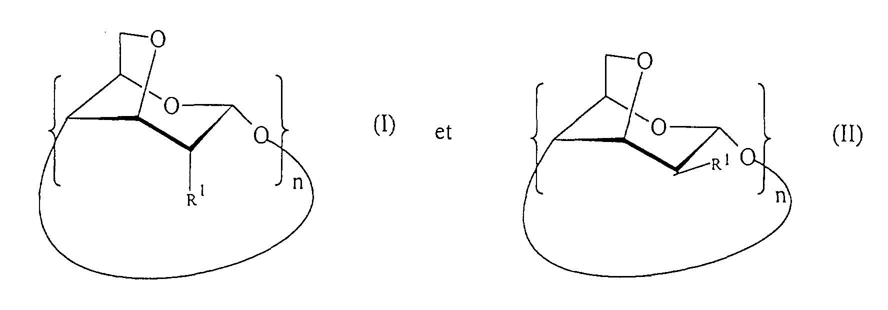 dans lesquelles les R¹ qui peuvent être identiques ou différents, représentent un atome d'hydrogène, un atome d'halogène, un groupe répondant à l'une des formules : OH, OR², OM, SH, SR², OCOR², NH₂, NR²R³, CONR²R³, CO NH₂, CN, COOR², COOH, OSO₂R², N₃ et R², dans lesquelles R² représente un groupe hydrocarboné, aliphatique ou aromatique, saturé ou insaturé, pouvant comporter un ou plusieurs hétéroatomes choisis parmi O, S et N, R³ représente un atome d'hydrogène ou un groupe hydrocarboné, aliphatique ou aromatique, saturé ou insaturé, pouvant comporter un ou plusieurs hétéroatomes choisis parmi O, S et N, et M représente un métal ou un cation monovalent, et n est égal à 6,7 ou 8, à condition que l'un au moins des R¹ ne soit pas le groupe OH et que R¹ ne soit pas le groupe méthoxy.

2. Dérivé selon la revendication 1, caractérisé en ce que tous les R¹ représentent OCOR² avec R² représentant un groupe alkyle, linéaire ou ramifié, de 1 à 20 atomes de carbon, ou OR² avec R² représentant un groupe alkyle, linéaire ou ramifié de 2 à 20 atomes de carbone.

3. Dérivé selon la revendication 2, caractérisé en ce qu'il répond à la formule (I) dans laquelle n est égal à 6 et tous les R¹ représentent OCOCH₃.

4. Dérivé selon la revendication 1, caractérisé en ce que l'un au moins des R¹ représente OSO₂R², un atome d'halogène, N₃ ou OM.

5. Dérivé selon la revendication 4, caractérisé en ce que l'un au moins des R¹ représente OSO₂R² avec R² réprésentant CF₃ ou

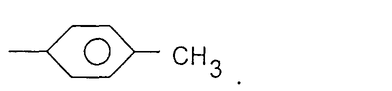

6. Dérivé selon la revendication 5, caractérisé en ce qu'il répond à la formule (I) dans laquelle l'un des R¹ représente 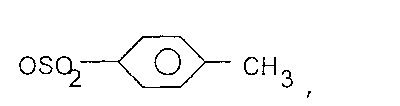 les autres R¹ représentent OH et n est égal à 6.

7. Procédé de préparation d'un dérivé répondant à l'une des formules (I) et (II) : 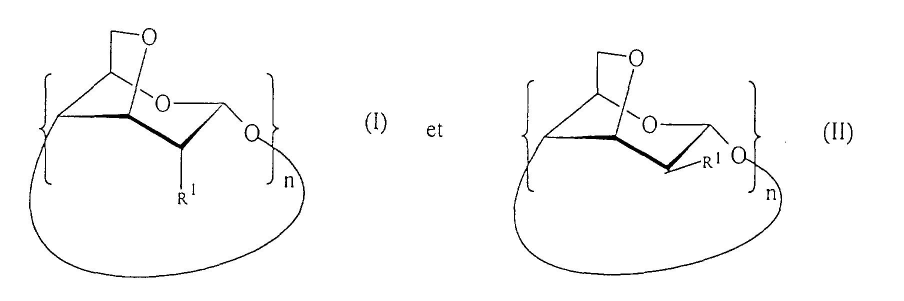 dans laquelle au moins l'un des R¹ représente un groupe de formule OR² ou OCOR² avec R² ayant la signification donnée dans la revendication 1, les autres R¹ représentent OH et n est égal à 6, 7 ou 8, caractérisé en ce qu'il consiste à faire réagir une peranhydrocyclodextrine de formule : 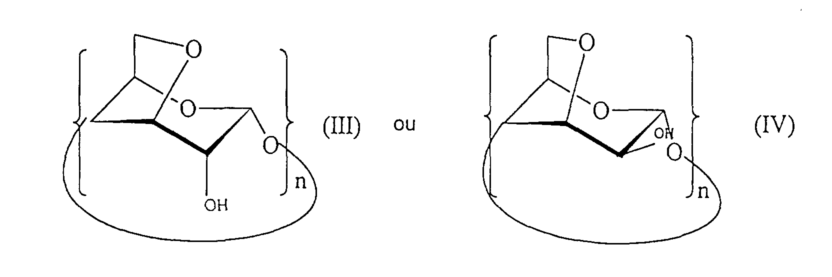 dans lesquelles n est égal à 6, 7 ou 8,
avec un composé de formule R²X, R²COX ou (R²CO)₂O dans lequel R² a la signification donnée ci-dessus et X représente un atome d'halogène.

8. Procédé de préparation d'un dérivé répondant à l'une des formules : 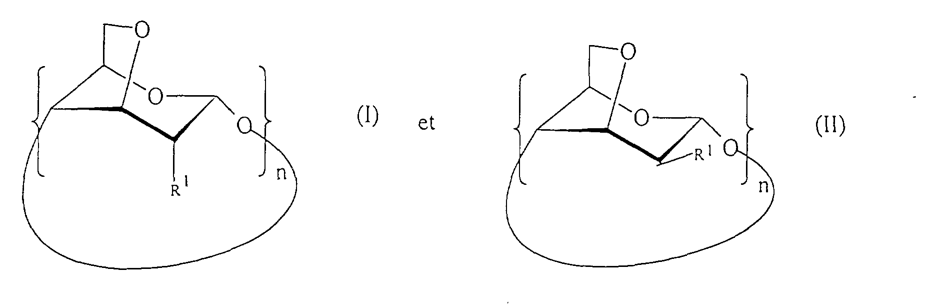 dans lesquelles, l'un au moins des R¹ représente un atome d'halogène ou un groupe de formule SH, SR², NH₂, NR²R³, CONR²R³, CONH₂, CN, COOR², COOH, OSO₂R², N₃ ou R², avec R², R³ et M ayant les significations données dans la revendication 1, les autres R¹ représentant OH, et n est égal à 6, 7 ou 8, caractérisé en ce qu'il comprend les étapes suivantes :
1) faire réagir une peranhydrocyclodextrine de formule : 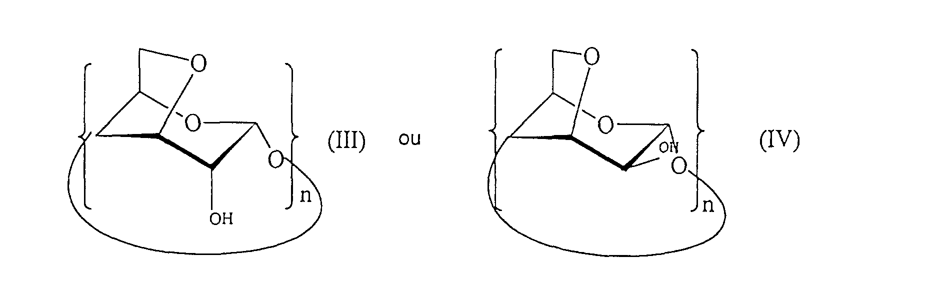 dans lesquelles n est égal à 6, 7 ou 8, avec un hydrure de métal alcalin pour convertir le(s) groupe(s) OH en groupe(s) OM avec M représentant un métal alcalin ;
2) faire réagir la peranhydrocyclodextrine modifiée obtenue en 1) avec un chlorure de formule ClOSO₂R² avec R² ayant la signification donnée dans la revendication 1, pour obtenir le dérivé de formule (I) ou (II) dans laquelle l'un au moins des R¹ est un groupe de formule OSO₂R² ; et
3) lorsque R¹ doit être différent de OSO₂R², faire réagir le dérivé obtenu dans la deuxième étape avec un ou plusieurs réactifs appropriés pour remplacer OSO₂R² par le groupe R¹ voulu.

9. Procédé de séparation d'ions présents dans une solution aqueuse, caractérisé en ce qu'il consiste à mettre en contact la solution avec un dérivé de cyclodextrine selon l'une quelconque des revendications 1 à 6, pour complexer cet ion et le séparer de la solution sous forme de complexe de cyclodextrine.

10. Procédé selon la revendication 9, caractérisé en ce que le dérivé de cyclodextrine est dissous dans un solvant organique immiscible avec la solution aqueuse.

11. Procédé selon l'une quelconque des revendications 9 et 10, caractérisé en ce que les ions à séparer sont choisis parmi les ions de métaux alcalins, les actinides et les lanthanides.

## Claims

1. Substituted derivatives of per(3,6-anhydro)cyclodextrin complying with one of the following formulas: 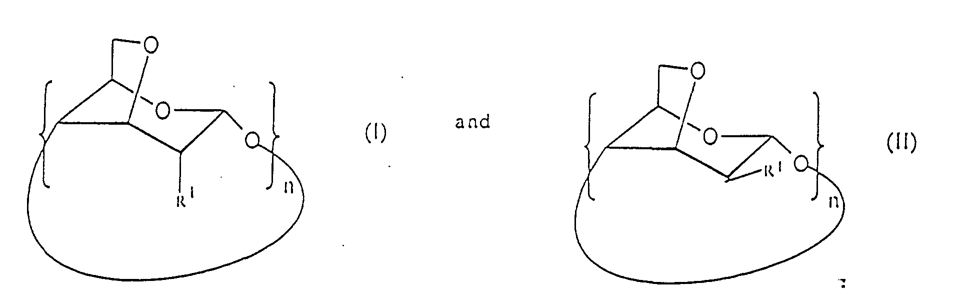 in which the R¹, which can be the same or different, represent a hydrogen atom, a halogen atom, a group complying with one of the formulas: OH, OR², OM, SH, SR², OCOR², NR²R³, CO NH₂ CN, COOR², COOH, OSO₂R², N₃ and R², in which R² represents a saturated or unsaturated, aliphatic or aromatic, hydrocarbon group, which can have one or more heteroatoms chosen from among O, S and N, R³ represents a hydrogen atom or a saturated or unsaturated, aliphatic or aromatic, hydrocarbon group, which can have one or more heteroatoms chosen from among O, S and N, and M represents a monovalent cation or a metal, and n is equal to 6, 7 or 8, provided that at least one of the R¹ is not the OH group and that R¹ is not the methoxy group.

2. Derivative according to claim 1, characterized in that all the R¹ represent OCOR² with R² representing a straight or branched alkyl group with 1 to 20 carbon atoms, or OR² with R² representing a straight or branched alkyl group with 2 to 20 carbon atoms.

3. Derivative according to claim 2, characterized in that it complies with formula (I), in which n is equal to 6 and all the R¹ represent OCOCH₃.

4. Derivative according to claim 1, characterized in that at least one of the R¹ represents OSO₂R², a halogen atom, N₃ or OM.

5. Derivative according to claim 4, characterized in that at least one of the R¹ represents OSO₂R² with R² representing CF₃ or

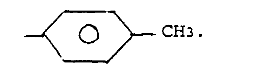

6. Derivative according to claim 5, characterized in that it complies with formula (I), in which one of the R¹ represents 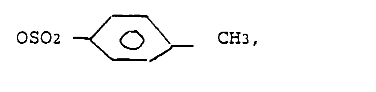 the other R¹ representing OH and n is equal to 6.

7. Process for the preparation of a derivative complying with one of the formulas (I) and (II): 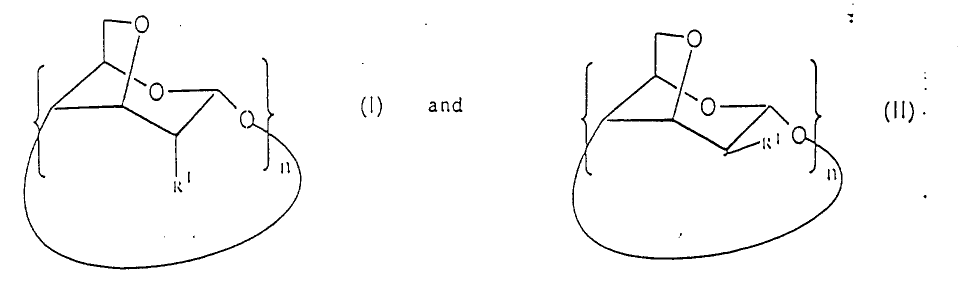 in which at least one of the R¹ represents a group of formula OR² or OCOR² with R² having the meaning given in claim 1, the other R¹ representing OH and n is equal to 6, 7 or 8, characterized in that it consists of reacting a peranhydrocyclodextrin of formula: 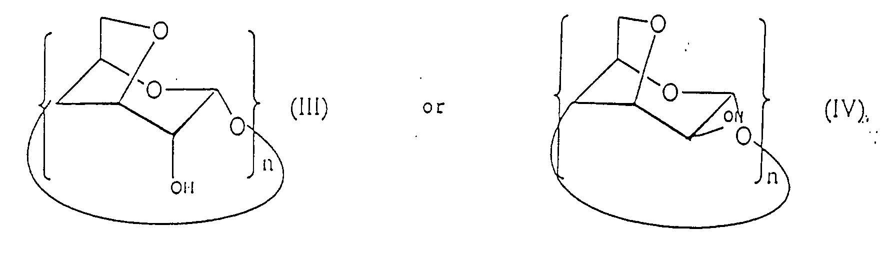 in which n is equal to 6, 7 or 8, with a compound of formula R²X, R²COX or (R²CO)₂O, in which R² has the meaning given hereinbefore and X represents a halogen atom.

8. Process for the preparation of a derivative complying with one of the formulas: 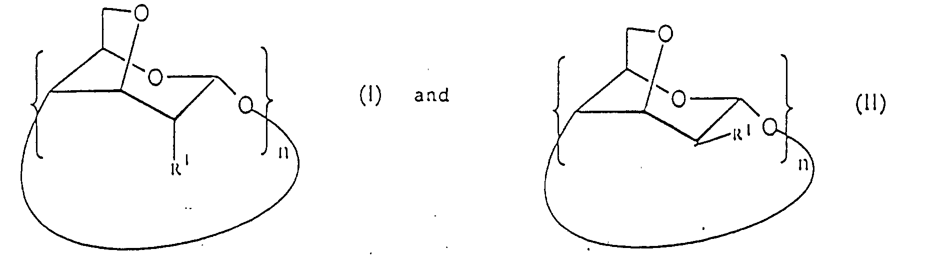 in which, at least one of the R¹ represents a halogen atom or a group of formula SH, SR², NH₂ NR²R³, CONR²R³, CN, COOR², COOH, OSO₂R², N₃ or R², with R², R³ and M having the meaning given in claim 1, the other R¹ representing OH and n is equal to 6, 7 or 8, characterized in that it comprises the following stages:
1) reacting a peranhydrocyclodextrin of formula: 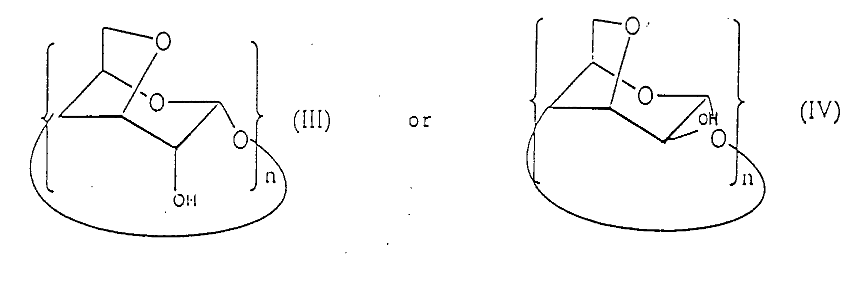 in which n is equal to 6, 7 or 8, with an alkali metal hydride in order to convert the OH group or groups into OM group or groups with M representing an alkali metal,
2) reacting the modified peranhydrocyclodextrin obtained in 1) with a chloride of formula ClOSO₂R² with R² having the meaning given in claim 1, to obtain the derivative of formula (I) or (II), in which at least one of the R' is a group of formula OSO₂R² and
3) when R¹ has to be different from OSO₂R², reacting the derivative obtained in the second stage with one or more appropriate reagents for replacing OSO₂R² by the desired R¹ group.

9. Process for the preparation of the ions present in an aqueous solution, characterized in that it consists of contacting the solution with a cyclodextrin derivative according to any one of the claims 1 to 6, for complexing said ion and separating it from the solution in the form of cyclodextrin complex.

10. Process according to claim 9, characterized in that the cyclodextrin derivative is dissolved in an organic solvent immiscible with the aqueous solution.

11. Process according to either of the claims 9 and 10, characterized in that the ions to be separated are chosen from among alkali metal ions, actinides and lanthanides.

## Patentansprüche

1. Substituiertes Per(3,6-anhydro)cyclodextrin-Derivat entsprechend einer der folgenden Formeln: 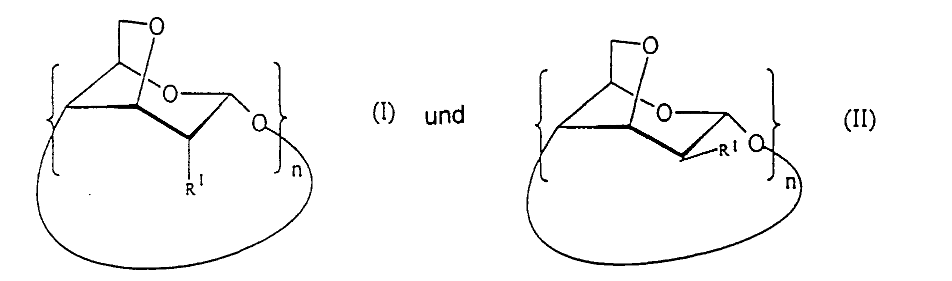 in welchen die R¹, die identisch oder verschieden sein können, ein Wasserstoffatom, ein Halogenatom, eine Gruppe entsprechend einer der Formeln OH, OR², OM, SH, SR², OCOR², NH₂, NR²R³, CONR²R³, CONH₂, CN, COOR², COOH, OSO₂R², N₃, und R² darstellen, worin R² eine gesättigte oder ungesättigte aliphatische oder aromatische Kohlenwasserstoffgruppe, die ein oder mehrere unter O, S und N gewählte Heteroatome enthalten kann, darstellt, R³ ein Wasserstoffatom oder eine gesättigte oder ungesättigte aliphatische oder aromatische Kohlenwasserstoffgruppe, die ein oder mehrere unter O, S und N gewählte Heteroatome enthalten kann, darstellt, M ein Metall oder ein einwertiges Kation darstellt und n gleich 6, 7 oder 8 ist, unter der Bedingung, dass wenigstens eines der R¹ nicht die Gruppe OH ist und dass R¹ nicht die Methoxygruppe ist.

2. Derivat nach Anspruch 1, dadurch gekennzeichnet, dass alle R¹ OCOR², wobei R² eine lineare oder verzweigte Alkylgruppe von 1 bis 20 Kohlenstoffatomen darstellt, oder OR², wobei R² eine lineare oder verzweigte Alkylgruppe von 2 bis 20 Kohlenstoffatomen darstellt, darstellen.

3. Derivat nach Anspruch 2, dadurch gekennzeichnet, dass es der Formel (I) entspricht, in welcher n gleich 6 ist und alle R¹ OCOCH₃ darstellen.

4. Derivat nach Anspruch 1, dadurch gekennzeichnet, dass wenigstens eines der R¹ OSO₂R², ein Halogenatom, N₃ oder OM darstellt.

5. Derivat nach Anspruch 4, dadurch gekennzeichnet, dass wenigstens eines der R¹ OSO₂R² darstellt, wobei R² CF₃ oder 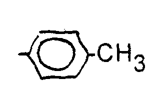 darstellt.

6. Derivat nach Anspruch 5, dadurch gekennzeichnet, dass es der Formel (I) entspricht, in welcher eines der R¹ 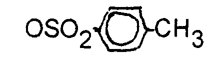 darstellt, die anderen R¹ OH darstellen und n gleich 6 ist.

7. Verfahren zur Herstellung eines Derivats entsprechend einer der Formeln (I) und (II): 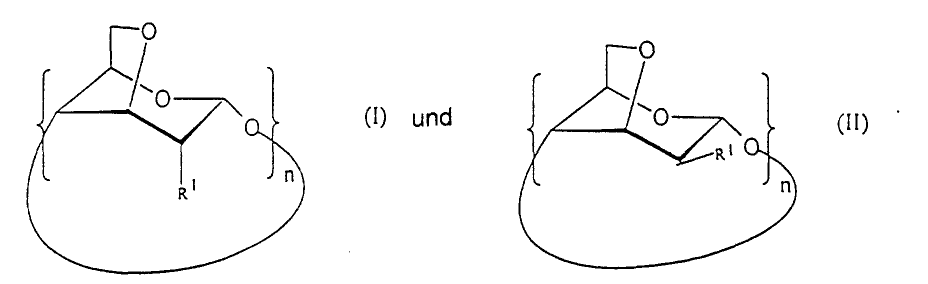 in welcher wenigstens eines der R¹ eine Gruppe der Formel OR² oder OCOR², wobei R² die in Anspruch 1 gegebene Bedeutung hat, darstellt, die anderen R¹ OH darstellen und n gleich 6, 7 oder 8 ist, dadurch gekennzeichnet, dass es darin besteht, ein Peranhydrocyclodextrin der Formel: 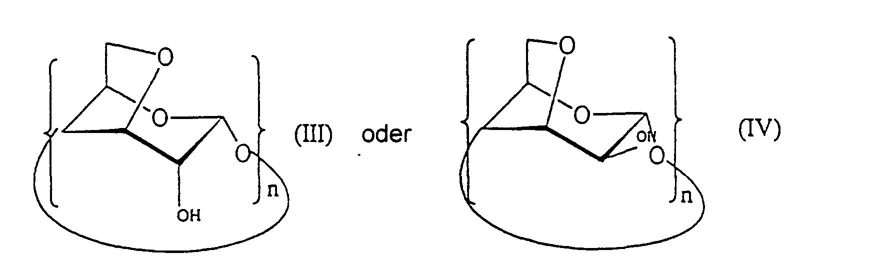 in welchen n gleich 6, 7 oder 8 ist, reagieren zu lassen mit einer Verbindung der Formel R²X, R²COX oder (R²CO)₂O, in welcher R² die oben gegebene Bedeutung hat und X ein Halogenatom darstellt.

8. Verfahren zur Herstellung einer Verbindung entsprechend einer der Formeln: 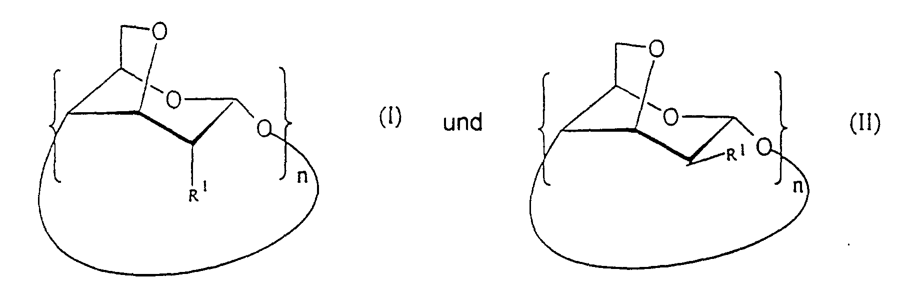 in welchen wenigstens eines der R¹ ein Halogenatom oder eine Gruppe der Formel SH, SR², NH₂, NR²R³, CONR²R³, CONH₂, CN, COOR², COOH, OSO₂R², N₃ oder R², wobei R², R³ und M die in Anspruch 1 gegebenen Bedeutungen haben, darstellt, die anderen R¹ OH darstellen und n gleich 6, 7 oder 8 ist, dadurch gekennzeichnet, dass es die folgenden Schritte umfasst:
1) ein Peranhydrocyclodextrin der Formel: 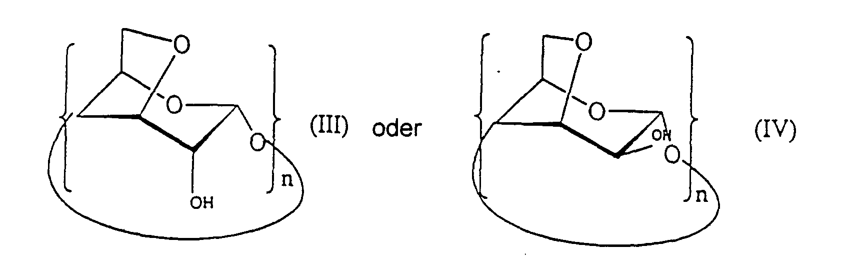 in welchen n gleich 6, 7 oder 8 ist, mit einem Alkalimetall-Hydrid reagieren zu lassen, um die OH-Gruppe in eine OM-Gruppe (bzw. die OH-Gruppen in OM-Gruppen) umzuwandeln, wobei M ein Alkalimetall darstellt;
2) das in 1) erhaltene modifizierte Peranhydrocyclodextrin mit einem Chlorid der Formel ClOSO₂R², wobei R² die in Anspruch 1 gegebene Bedeutung hat, reagieren zu lassen, um das Derivat der Formel (I) oder (II), worin wenigstens eines der R¹ eine Gruppe der Formel OSO₂R² ist, zu erhalten; und,
3) wenn R¹ von OSO₂R² verschieden sein soll, das in dem zweiten Schritt erhaltene Derivat mit einem oder mehreren Reagenzien reagieren zu lassen, die geeignet sind, OSO₂R² durch die gewünschte Gruppe R¹ zu ersetzen.

9. Verfahren zur Abtrennung von lonen, die in einer wässrigen Lösung vorhanden sind, dadurch gekennzeichnet, dass es darin besteht, die Lösung mit einem Cyclodextrinderivat nach einem der Ansprüche 1 bis 6 in Kontakt zu bringen, um dieses lon zu komplexieren und es in Form eines Cyclodextrinkomplexes von der Lösung abzutrennen.

10. Verfahren nach Anspruch 9, dadurch gekennzeichnet, dass das Cyclodextrinderivat in einem mit der wässrigen Lösung nicht mischbaren organischen Lösungsmittel gelöst ist.

11. Verfahren nach einem der Ansprüche 9 und 10, dadurch gekennzeichnet, dass die abzutrennenden lonen unter den Alkalimetall-, Actiniden- und Lanthaniden-lonen gewählt werden.
